# EUROPÄISCHE PATENTANMELDUNG

(11) **EP 1 330 006 A1**
(43) Veröffentlichungstag der Anmeldung: **23.07.2003**
(21) Anmeldenummer: 02000967.6
(22) Anmeldetag: 16.01.2002
(51) Int. Cl.: H02J 3/00

(54) **Energieversorgungsnetzwerk und Verfahren zum Betrieb eines Energieversorgungsnetzwerks**

(71) Anmelder: SIEMENS AKTIENGESELLSCHAFT, 80333 München (DE)
(72) Erfinder: Klaar, Jürgen, 47506 Neukirchen-Vluyn (DE)

(57) **Zusammenfassung**

Bei einem erfindungsgemäßen Energieversorgungsnetzwerk (1) umfassend mindestens eine Kraftwerksanlage (5), mindestens einen Energielieferanten (10), mindestens einen Energieeinspeiseknoten (20), eine Anzahl an Energieverteilungsknoten (25) und eine Anzahl an Verbrauchern, welche über die Energieverteilungsknoten (25) mit elektrischer Energie versorgt werden, umfassen mindestens ein Teil der Energieverteilungsknoten (25) jeweils einen Leistungsmesser (30,30a,30b, 30c,30d), mittels welchem die entnommene summierte elektrische Leistung all derjenigen Verbraucher (60) feststellbar ist, welche über den jeweiligen Energieverteilungsknoten (25) mit elektrischer Energie versorgt sind.
Ein erfindungsgemäßes Verfahren macht von vergangenen (40) und momentanen Verbrauchsdaten (45) Gebrauch, um einen Leistungsbedarf möglichst genau zu prognostizieren und eine entsprechende Einspeisung von elektrische Energie in den Einspeiseknoten (20) durch die Kraftwerksanlage (5) zu veranlassen.

## Beschreibung

Die Erfindung betrifft ein Energieversorgungsnetzwerk und ein Verfahren zum Betrieb eines Energieversorgungsnetzwerks.

Ein großes Problem bei der Bereitstellung von elektrischer Energie mittels Kraftwerksanlagen besteht darin, dass elektrische Energie nicht in nennenswertem Umfang speicherbar ist; die bekannten Speichermöglichkeiten wie z.B. Batterien oder Akkus weisen nur eine sehr begrenzte Kapazität auf, so dass damit eine Versorgung von Haushalten und/oder Industriebetrieben nicht möglich ist, geschweige denn über einen längeren Zeitraum. Praktisch die einzige Möglichkeit, eine größere Menge an Energie zu speichern, besteht in der Speicherung von gewaltigen Wassermengen in einem Oberbecken, welche dann kurzfristig bei Bedarf über eine Triebwasserleitung einer oder mehreren Wasserturbinen über ein Gefälle zugeführt werden. Ein derartiges Pumpspeicherkraftwerk ist jedoch sehr aufwendig und kostenintensiv; dasselbe gilt für andere Energiespeichermöglichkeiten wie z.B. Brennstoffzellen, Wasserstofftanks, Gastanks und ähnliches.

Daher muss der größte Teil an elektrischer Energie, welcher in einem Augenblick benötigt wird, zu genau diesem Augenblick bereitgestellt werden. Überschreitet die Nachfrage das Angebot, so kann das Energieversorgungsnetzwerk zusammenbrechen, da die Generatoren überlastet werden. Zumindest aber verteuert sich die über die vorab angefragte Abnahmemenge hinausgehende zusätzliche Abnahme drastisch. Ist hingegen das momentan mögliche Angebot (abzüglich einer Sicherheitsreserve) größer als die momentane Abnahme, so wird unnötig viel installierte, elektrische Energie bereit gehalten, welche nicht verbraucht wird, was zu einer Erhöhung der Erzeugungskosten führt; wie im Falle einer Mehrabnahme von elektrischer Energie führt auch eine Minderabnahme zu einem u. U. drastisch erhöhten Preis pro abgenommener kWh. Deshalb ist es zur Planung des Kraftwerkseinsatzes nötig, dass die Energielieferanten einen möglichst genauen Energieabnahmeplan für einen zukünftigen Abnahmezeitraum prognostizieren. Dies ist auch deswegen erforderlich, da sehr viele Kraftwerksanlagen, beispielsweise Dampfkraftwerke, einen mehrstündigen Vorlauf benötigen, bis sie ihre Nennleistung erreichen und in das Energieversorgungsnetzwerk einspeisen können. Die genannte lange Vorlaufzeit ist praktisch nur bei Gasturbinenkraftwerken und bei den bereits genannten Pumpspeicherkraftwerken nennenswert reduziert, beispielsweise auf einige Minuten. Letztgenannte Kraftwerkstypen eignen sich daher besonders zur Bereitstellung einer sogenannten schnellen "Minutenreserve".

Bisher basieren bekannte Stromabnahmeprognosen im Wesentlichen auf vergangenen Verbrauchsdaten, beispielsweise auf dem Stromverbrauchsverlauf während der Tage des zurückliegenden Jahres, wobei der Stromverbrauchsverlauf dabei z.B. mit einer Auflösung von 15 min, 30, min, 60 min oder eines anderen Zeitraums festgehalten ist. Große Energieerzeugungsunternehmen fordern oft eine Prognose über den erwarteten Stromverbrauch 24 Stunden im Voraus, um ihre Kraftwerkseinsatzplanung - meist für den nächsten Tag - möglichst genau durchführen zu können. Die auf den genannten vergangenen Verbrauchsdaten basierenden Prognosen können dadurch verbessert werden, indem z.B. aktuelle Unterschiede zu den vergangenen Verbrauchsdaten wie die aktuellen Tages- und/oder Nachttemperaturen, bekannte Störungen, Betriebsschließungen oder -veränderungen von Industriebetrieben berücksichtigt und die Prognose z.B. hinsichtlich der potenziellen Gesamtabnahmemenge dementsprechend korrigiert wird.

In Zukunft ist zu erwarten, dass elektrische Energie beispielsweise auf sogenannten Spotmärkten im größeren Umfang auch sehr kurzfristig bestellt und geliefert werden kann, so dass auf vergangenen Verbrauchsdaten basierende Verbrauchsprognosen immer ungenauer werden, je näher der prognostizierte Zeitraum dem Zeitpunkt der Prognose liegt und je kürzer dieser Zeitraum ist; bei einem zukünftig möglichen Stromhandel im 15-Minutentakt sind vergangene Verbrauchsdaten als alleinige Basis einer Verbrauchsprognose praktisch nicht zu gebrauchen. Ferner wird zukünftig auch erwartet, dass neben einer Prognose über den voraussichtlichen Wirkleistungsbedarf auch eine Prognose über den voraussichtlichen Blindleitungsbedarf abzugeben ist.

Der Erfindung liegt daher die Aufgabe zugrunde, ein Energieversorgungsnetzwerk und ein Verfahren zum Betrieb eines solchen anzugeben, welche insbesondere die beschriebenen Nachteile überwinden, flexibel einsetzbar sind und vor allem eine genauere Prognose eines erwarteten Stromverbrauchs ermöglichen.

Bezüglich des Energieversorgungsnetzwerks wird die Aufgabe erfindungsgemäß gelöst durch ein Energieversorgungsnetzwerk, welches mindestens eine Kraftwerksanlage, mindestens einen Energielieferanten, mindestens einen Energieeinspeiseknoten, eine Anzahl an Energieverteilungsknoten und eine Anzahl an Verbrauchern, welche über die Energieverteilungsknoten mit elektrischer Energie aus der Kraftwerksanlage versorgt sind, umfasst, wobei die elektrische Energie in den Energieeinspeiseknoten eingespeist ist und wobei mindestens ein Teil der Energieverteilungsknoten jeweils einen Leistungsmesser umfassen, mittels welchem die entnommene summierte elektrische Leistung all derjenigen Verbraucher feststellbar ist, welche über den jeweiligen Energieverteilungsknoten mit elektrischer Energie versorgt sind.

Ein weiteres erfindungsgemäßes Energieversorgungsnetzwerk ist nicht beschränkt auf die Einspeisung, Verteilung und Erfassung von elektrischer Energie bzw. Leistung gemäß der vorher angegebenen Lehre; es sind Energieformen jeglicher Art denkbar.

Die Erfindung geht dabei von der Überlegung aus, dass aktuelle Verbrauchsdaten umfassend solche, welche mittels der genannten Leistungsmesser erfasst werden, eine Verbrauchsprognose erheblich verbessern können.

So kann zu einem beliebigen Zeitpunkt festgestellt werden, wie die Energieversorgung über den jeweiligen, einen Leistungsmesser umfassenden, Energieverteilungsknoten zeitlich verläuft; insbesondere sind Veränderungen wie z.B. ein deutlicher Mehr- oder Minderbedarf an elektrischer Leistung im Vergleich zu einem kürzlich zurückliegenden Zeitpunkt detektierbar und quantifizierbar. Aus einem derartigen, nun feststellbaren, Verlauf kann z.B. auf das kürzlich zurückliegende Zu- oder Abschalten zumindest von größeren Verbrauchern, beispielsweise Industrieanlagen, geschlossen und diese Informationen zur Erstellung einer Verbrauchsprognose verwendet werden.

Leistungsmesser können insbesondere an solchen Energieverteilungsknoten vorgesehen werden, über welche Großverbraucher und/oder Verbrauchergruppen versorgt sind. So ist ein Mehroder Minderbedarf nicht nur quantitativ, sondern auch lokal erfassbar und kann einem Verbraucher und/oder einer Verbrauchergruppe als "Verursacher" zugeschrieben und die Verbrauchsprognose mit Hilfe dieser Informationen verbessert werden.

In einer vorteilhaften Ausgestaltung der Erfindung ist eine Menge an elektrischer Leistung, welche von der Kraftwerksanlage zur Einspeisung von elektrischer Energie in den Energieeinspeiseknoten bereitzustellen ist, vom Energielieferanten ermittelt mittels vergangener und momentaner Verbrauchsdaten mindestens eines Teils der Verbraucher, wobei die momentanen Verbrauchsdaten die mittels der Leistungsmesser jeweils festgestellte summierte elektrische Leistung umfassen.

In Kenntnis der momentanen Verbrauchsdaten ist es in Verbindung mit vergangenen Verbrauchsdaten, wie z.B. denen des entsprechenden Tags des Vorjahres, und ggf. unter zusätzlicher Berücksichtigung von Umgebungsbedingungen, wie z.B. der Temperatur und/oder eines absehbaren Minderverbrauchs und/oder einen absehbaren Mehrverbrauchs, möglich, eine bessere Prognose hinsichtlich des zu erwartenden Stromverbrauchs abzugeben, als dies allein mit vergangenen Verbrauchsdaten möglich wäre.

Dies trifft um so mehr zu, je näher der zu prognostizierende Zeitraum dem Zeitpunkt der Prognoseerstellung liegt. Besonders vorteilhaft sind dadurch Prognosen für den Stromhandel an einem eingangs genannten "Spotmarkt" erstellbar, wofür insbesondere kurzfristige und genau Prognosen nötig sind, um einen möglichst günstigen Strompreis aushandeln zu können.

Vorteilhaft sind diejenigen Energieverteilungsknoten, welche jeweils einen Leistungszähler umfassen, mittels der vergangenen Verbrauchsdaten und einer Klassifizierung letzterer festgelegt.

Dadurch ist es möglich, Leistungsmesser gezielt an denjenigen Energieverteilungsknoten vorzusehen, welche einen besonders gewichtigen Einfluss auf den Gesamtenergieverbrauch haben.

Besonderes Augenmerk soll dabei auf diejenigen Verbraucher gelegt werden, welche einen hohen Leistungsbedarf aufweisen und/oder bei welchen eine Leistungsbedarfsprognose auf Grund vergangener Verbrauchsdaten nur sehr schwer oder sehr ungenau möglich ist. Auf diese Weise können momentane Verbrauchsdaten der genannten Verbraucher dazu verwendet werden, um eine Verbrauchsprognose deutlich zu verbessern, indem gewissermaßen aus den vergangenen Verbrauchsdaten erwachsende Unsicherheiten für eine Verbrauchsprognose beseitigt werden.

Bezüglich des Verfahrens wird die Aufgabe erfindungsgemäß gelöst durch ein Verfahren zum Betrieb eines Energieversorgungsnetzwerks, umfassend mindestens eine Kraftwerksanlage, mindestens einen Energielieferanten, mindestens einen Energieeinspeiseknoten und eine Anzahl an Verbrauchern, welche über eine Anzahl an Energieverteilungsknoten mit elektrischer Energie versorgt werden, wobei eine Menge an elektrischer Leistung, welche von der Kraftwerksanlage zur Einspeisung von elektrischer Energie in den Energieeinspeiseknoten bereitzustellen ist, vom Energielieferanten ermittelt wird mittels vergangener und momentaner Verbrauchsdaten mindestens eines Teils der Verbraucher, wobei die momentanen Verbrauchsdaten einen mittels Leistungsmesser festgestellten elektrischen Leistungsbedarf umfassen, und die Kraftwerksanlage die ermittelte Menge an elektrischer Leistung zur Einspeisung von elektrischer Energie in den Energieeinspeiseknoten bereitstellt.

Das erfindungsgemäße Verfahren geht dabei von der Überlegung aus, dass eine besonders gute Verbrauchsprognose dann möglich ist, wenn diese auf vergangenen und momentanen Verbrauchsdaten basiert.

In einer vorteilhaften Ausgestaltung der Erfindung ermitteln die Leistungsmesser eine entnommene summierte elektrische Leistung derjenigen Verbraucher, welche über den, den jeweiligen Leistungsmesser umfassenden, Energieverteilungsknoten mit elektrischer Energie versorgt werden.

Auf diese Weise kann die elektrische Leistung, welche über den genannten Energieverteilungsknoten für die an diesen Knoten angeschlossenen Verbraucher und/oder weiteren Energieverteilungsknoten (Unterverteilungsknoten) bereitgestellt und von den Verbrauchern als elektrische Energie verbraucht wird, gezielt erfasst werden, so dass insbesondere Veränderungen des Leistungs- und/oder Energiebedarfs dieses Knotens sicher erkannt und in eine Verbrauchsprognose eingearbeitet werden können.

Besonders vorteilhaft werden die Leistungsmesser für diejenigen Energieverteilungsknoten vorgesehen, welche auf Grund einer Klassifizierung der vergangenen Verbrauchsdaten einen hohen Leistungsbedarf und/oder einen überraschenden Leistungsbedarf der über den jeweiligen Energieverteilungsknoten versorgten Verbraucher und/oder Verbrauchergruppen erwarten lassen.

Durch die genannte Klassifizierung können gezielt diejenigen Energieverteilungsknoten identifiziert werden, deren angeschlossene Verbraucher einen gewichtigen Anteil am Gesamtenergieverbrauch haben. Die an derartigen Energieverteilungsknoten angeschlossenen Leistungszähler gestatten dann eine Beobachtung eines momentanen Verbrauchsverhaltens der angeschlossenen Verbraucher, so dass insbesondere eine kurzfristige Verbrauchsprognose sehr genau erstellbar ist, wenn die genannten momentanen Verbrauchsdaten, ggf. unter zusätzlicher Berücksichtigung von aktuellen Umgebungsbedingungen wie der Temperatur, zur Korrektur der vergangenen Verbrauchsdaten, beispielsweise der Verbrauchsdaten des entsprechenden Tages des Vorjahres, herangezogen werden und die Verbrauchsprognose entsprechend verbessert wird. Dadurch, dass bei dieser Ausführungsform der Erfindung diejenigen Verbraucher und/oder Verbrauchergruppen identifizierbar sind, welche ein auffälliges Verbrauchsverhalten zeigen, beispielsweise einen unerwarteten Minderbedarf infolge einer Betriebsstörung und/oder einer Reduzierung des in einem Industriebetrieb gefahrenen Schichtbetriebs oder einen unerwarteten Mehrbedarf infolge eines (kurzfristigen) vermehrten Auftragseingangs eines Industriebetriebs, können die genannten Verbraucher und/oder Verbrauchergruppen gezielt z.B. per e-Mail, Fax oder Telefon angesprochen und von diesen weitere Informationen über den möglichen zukünftigen Energiebedarf angefragt werden. So kann eine Verbrauchsprognose des zukünftigen, insbesondere kurzfristigen, Leistungs- und/oder Energiebedarfs weiter verbessert werden.

Im Folgenden werden zwei Ausführungsbeispiele der Erfindung näher dargestellt.

Es zeigen:
- FIG 1: ein erfindungsgemäßes Energieversorgungsnetzwerk,
- FIG 2: einen archivierten Verlauf vergangener Verbrauchsdaten,
- FIG 3: einen momentanen, realen Verlauf von Verbrauchsdaten,
- FIG 4: einen Verlauf der vergangenen (FIG 2) und der momentanen (FIG 3) Verbrauchsdaten in einem Bild,
- FIG 5: einen Verlauf der Differenz zwischen momentanen (FIG 3) und vergangenen (FIG 2) Verbrauchsdaten,
- FIG 6: ein Ausführungsbeispiel eines erfindungsgemäßen Energieversorgungsnetzwerks, bei dem Verbraucher klassifiziert sind,
- FIG 7: ein Verbrauchsprofil einiger Verbraucher,
- FIG 8: einen archivierten Verlauf vergangener Verbrauchsdaten für die Verbraucher aus Fig. 6,
- FIG 9: einen prognostizierten Verlauf von Verbrauchsdaten für die Verbraucher aus Fig. 6,
- FIG 10: die Differenz der Verbrauchsverläufe aus Fig. 8 und 9, und
- FIG 11: ein Flussdiagramm zur optimierten Verbrauchsprognose.

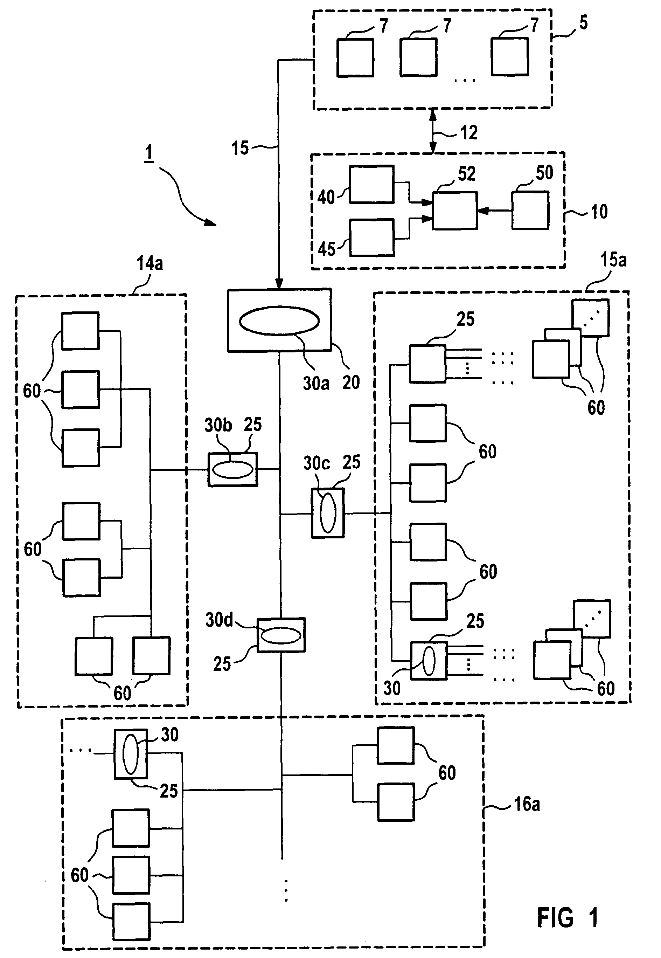

In FIG 1 ist ein erfindungsgemäßes Energieversorgungsnetzwerk 1 dargestellt, dieses umfasst Energieerzeugungsanlagen 7, einen Energielieferanten 10, einen Haupteinspeiseknoten 20 sowie eine Anzahl von Energieverteilungsknoten 25 und Verbrauchern 60.

Der Energielieferant 10 steht über eine Verbindung 12 mit einem Energieerzeuger 5 in Verbindung, welcher die Energieerzeugungsanlagen 7 betreibt und mittels letzterer eine Energieeinspeisung 15 in den Haupteinspeiseknoten 20 vornimmt. Diese gesamte Energieeinspeisung 15 wird mittels der Energieverteilungsknoten 25 verteilt auf Energieverteilungsknoten 25, die die zugeführte Energie weiter aufteilen, und/oder direkt angeschlossene Verbraucher 60.

Die Menge an Energie, welche vom Energieerzeuger 5 mittels der Energieerzeugungsanlagen 7 als Einspeisung 15 in den Haupteinspeiseknoten 20 gespeist wird, richtet sich nach den Anforderungen, welche der Energielieferant 10 z.B. in Form einer Verbrauchsprognose 52, an den Energieerzeuger 5 stellt. Der Energielieferant stützt seine Verbrauchsprognose dabei auf vergangene Verbrauchsdaten 40, beispielsweise die Verbrauchsdaten des zurückliegenden Jahres und momentane Verbrauchsdaten 45, welche Messwerte umfassen, die mittels Leistungsmesser 30,30a,30b,30c,30d, welche zumindest von einigen der Energieverteilungsknoten umfasst sind, aufgenommen werden.

Diese Messwerte geben Aufschluss darüber, welcher Stromverbrauch von den an den betreffenden Energieverteilungsknoten 25 angeschlossenen Verbrauchern 60 verursacht ist. Diese Messwerte können gespeichert werden, daraus Mittelwerte und/oder Trends gebildet werden, u.s.w.

Zur Erstellung der Verbrauchsprognose 52 können vom Energielieferanten 10 weiterhin Verbrauchseinflussdaten 50, wie z.B. die aktuellen Tages- und/oder Nachttemperaturen, andere klimatische Bedingungen oder auch Kenntnisse über ein aktuelles Verbrauchsverhalten ihm bekannter Verbraucher verwendet werden.

Je näher der zu prognostizierende Verbrauchszeitraum dem Zeitpunkt der Prognoseerstellung liegt, desto wichtiger ist die Berücksichtigung der momentanen Verbrauchsdaten 45 und ggf. deren Änderung und/oder Trends und/oder die Berücksichtigung der Verbrauchseinflussdaten 50.

Die in FIG 1 dargestellten Verbraucher 60 können z.B. als Kleinverbraucher (Haushalte), größere Wohneinheiten, Geschäftsbetriebe, Industriebetriebe oder Großbetriebe mit Mehrschichtbetrieb ausgebildet sein. Sie können fernen induktive Verbraucher, wie z.B. rotierende Maschinen, umfassen.

Außerdem können ein oder mehrere Verbraucher 60 von einem anderen Energielieferanten als dem Energielieferanten 10 mit elektrischer Energie versorgt werden, welche in den Haupteinspeiseknoten 20 eingespeist ist.

Der Energielieferant 10 hat üblicherweise durch Verträge einen festen Kundenstamm an Verbrauchern 60 und verfügt daher meist über Daten bezüglich des Gesamtjahresverbrauchs und dessen zeitlichen Verlaufs der einzelnen Kunden. Diese Daten liegen ihm z.B. in Form von Verbrauchsprofilen (vergangenen Verbrauchsdaten 40) des Vorjahres zusammen mit einigen Einflussparametern wie den Tages- und Nachttemperaturen und ggf. weiteren klimatischen Größen vor. Mittels der momentanen Verbrauchsdaten 45 können zumindest größere aktuell zu erwartende Abweichungen von den genannten vergangenen Verbrauchsdaten 40 erkannt und zur Erstellung einer Verbrauchsprognose 52 genutzt werden. Dadurch ist der Energielieferant 10 in der Lage, mittels der vergangenen Verbrauchsdaten 40, der momentanen Verbrauchsdaten 45 sowie ggf. der Verbrauchseinflussdaten 50 eine genaue, differenzierte Verbrauchsprognose zu erstellen und dementsprechend einen günstigen Lieferpreis für elektrische Energie mit dem Energieerzeuger 5 auszuhandeln.

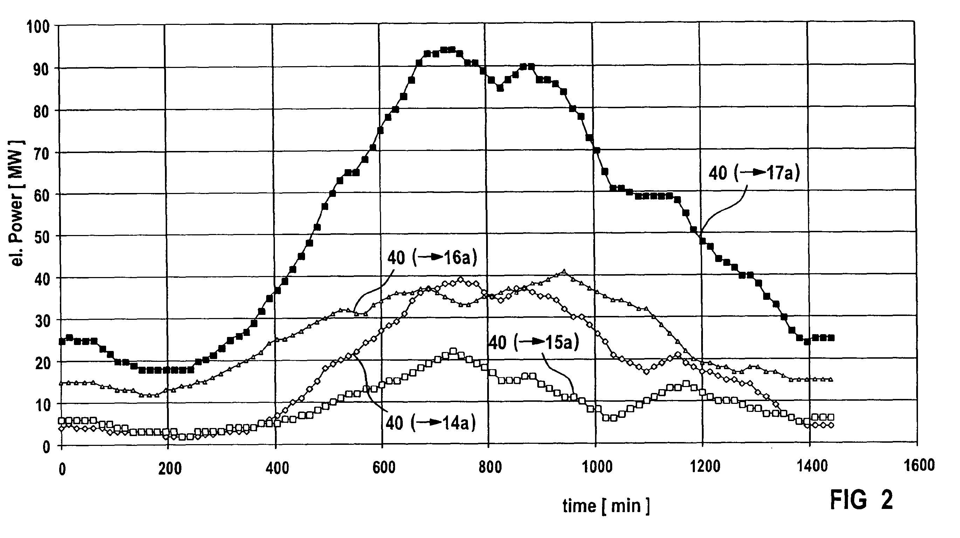

In der Figur 2 ist beispielhaft der archivierte Verlauf vergangener Verbrauchsdaten 40 von drei der Verbraucher 60 und/oder Verbrauchergruppen 14a,15a,16a während eines Tages des zurückliegenden Jahres dargestellt zusammen mit der Summe 17a der genannten Verbraucher.

Dem Energielieferanten 10 ist der vergangene Jahres-/Tagesverbrauch seiner Vertragskunden, welcher in den Haupteinspeiseknoten 20 eingespeist worden ist, üblicherweise bekannt. Der Energielieferant 10 kennt somit die Jahresverbräuche seiner Einzelkunden und kann damit an den verschiedenen Energieverteilungsknoten 25 die entsprechenden gesamten Jahresverbräuche ermitteln. Für den Fall, dass ein oder mehrere Verbraucher bei einem anderen Energielieferanten unter Vertrag stehen, ergeben sich derartige "Fremdverbräuche" durch die Differenz der Gesamt-Einspeisung in den Haupteinspeiseknoten 20 minus der summierten (bekannten) Jahresverbräuche derjenigen Verbraucher 60, welche bei dem Energielieferanten 10 unter Vertrag stehen. Die "Fremdverbräuche" können dem Energielieferanten 10 von anderen Energielieferanten auch mitgeteilt und entsprechend berücksichtigt werden.

In der Figur wurde als Beispiel angenommen, dass durch die Leistungsmesser 30b, 30c und 30d aus FIG 1 im 15-Minuten-Takt die mittlere Wirkleistung der an den zugehörigen Energieverteilungsknoten angeschlossenen Verbrauchergruppen 14a,15a,16a gemessen und zur Weiterverarbeitung an eine nicht näher dargestellte Zentrale übertragen wurde. In Ergänzung zur mittleren Wirkleistung kann auch die mittlere Blindleistung gemessen und übertragen werden.

Ein mögliches vergangenes Verbrauchsprofil der durchschnittlich benötigten Wirkleistung an den Energieverteilungsknoten mit den Leistungsmessern 30b, 30c und 30d ist zusammen mit der archivierten Summe 17a des vergangenen Gesamtverbrauchs, aufgenommen durch den Leistungsmesser 30a, in der Figur 2 dargestellt.

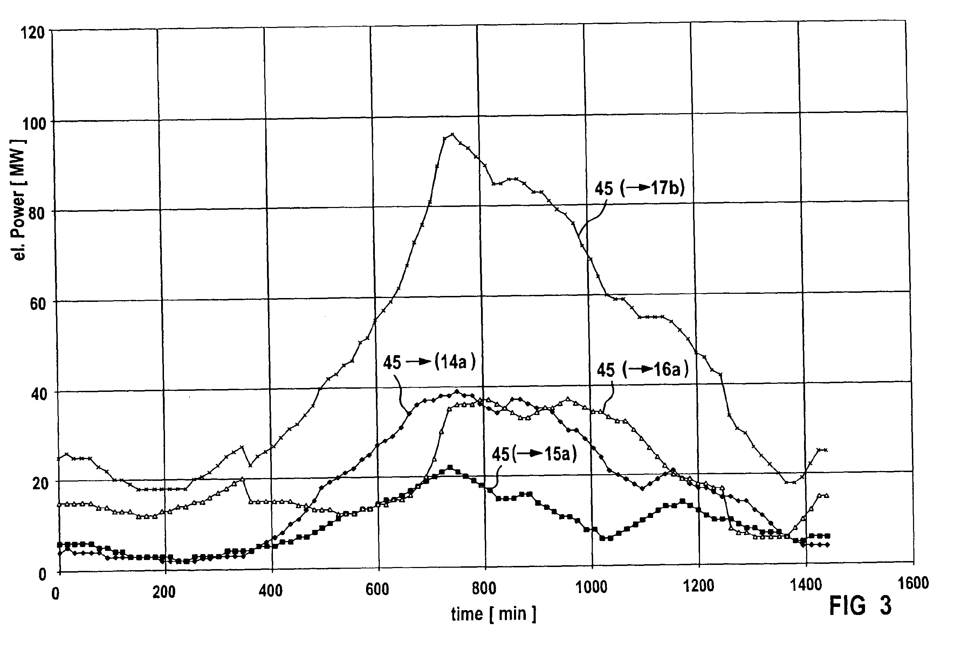

Figur 3 zeigt einen momentanen, realen Verlauf von momentanen Verbrauchsdaten 45.

Der dargestellte Verlauf der momentanen Verbrauchsdaten 45 weicht vom entsprechenden in Figur 2 gezeigten archivierten Verlauf der vergangenen Verbrauchsdaten 40 ab, was beispielsweise durch den zeitweiligen Ausfall eines großen Verbrauchers verursacht sein könnte, so dass insbesondere der momentane, tatsächliche Gesamtverbrauch 17b von der Summe 17a des Gesamtverbrauches aus FIG 2 deutlich abweicht. Die Ursache der Abweichung ist zunächst unbekannt und Korrekturen für eine Verbrauchsprognose sind daher schwierig.

Mit Hilfe der Leistungsmesser 30b, 30c und 30d werden jedoch die tatsächlichen Verbräuche an den entsprechenden Energieverteilungsknoten 25 erfasst und der Energielieferant 10 kann eine Verbrauchsprognose entsprechend korrigieren, insbesondere, wenn eine kurzfristige Verbrauchsprognose gefordert ist.

Des Weiteren ist durch die Kenntnis des durch die Leistungsmesser 30b, 30c und 30d jeweils festgestellten Leistungsbedarfs auch der physikalische Ort des beispielhaft gezeigten Minderbedarfs eingrenzbar. Ein Vergleich der Verläufe aus Figur 2 und Figur 3 zeigt, dass der momentane, tatsächliche Leistungsbedarf, welcher durch den Leistungsmesser 30d festgestellt ist, von dem entsprechenden archivierten Verlauf abweicht. Entsprechend des Einbauorts des Leistungsmessers 30d kommen nun als Verursacher des Minderbedarfs nur noch diejenigen Verbraucher 60 der Verbrauchergruppe 16a in Frage, welche über denjenigen Energieverteilungsknoten 25 versorgt werden, welcher den Leistungsmesser 30d umfasst. Dadurch kann der Energielieferant 10 beispielsweise bei den in Frage kommenden Verbrauchern 60 der Verbrauchergruppe 16a gezielt Informationen einholen, beispielsweise per e-Mail, Fax oder Telefon, und die Verbrauchsprognose entsprechend verbessern.

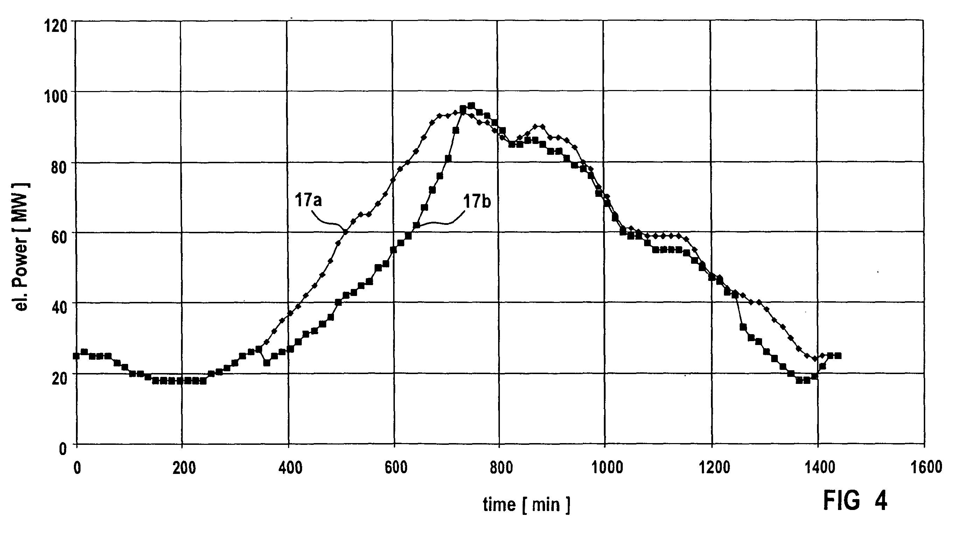

In der Figur 4 sind die Summe 17a des vergangenen Gesamtverbrauchs und der tatsächliche, momentane Gesamtverbrauch 17b, in einem Bild dargestellt.

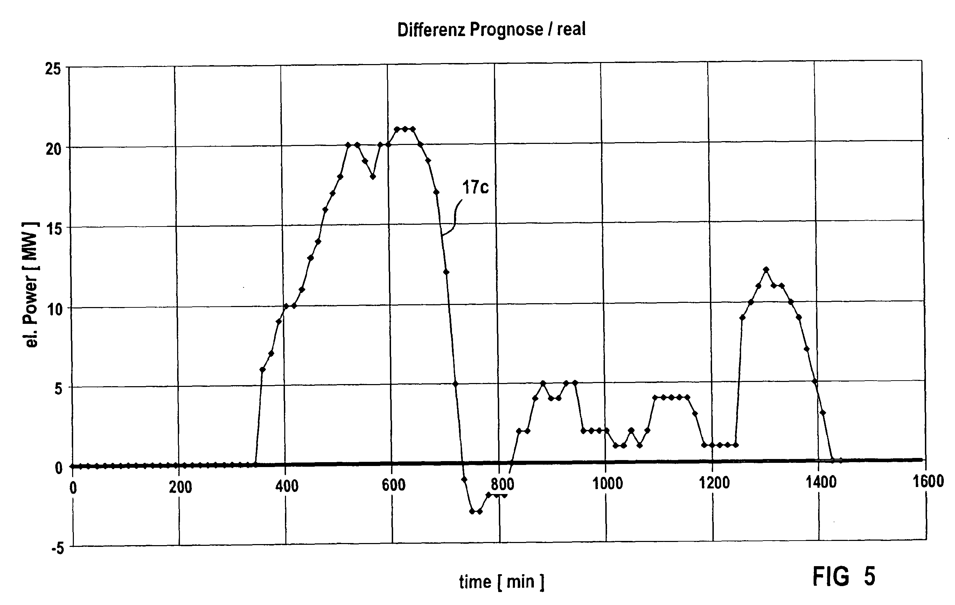

Figur 5 zeigt die entsprechende Differenz 17c der archivierten und der momentanen Gesamtverbräuche 17a bzw. 17b aus FIG 4.

Wie bereits erwähnt, kann der Energielieferant 10 bei einem momentanen Minderbedarf (oder auch Mehrbedarf) gezielt nach der Ursache hierfür forschen. Aufgrund der Messungen durch die Leistungsmesser 30b, 30c und 30d ist erkennbar, dass ein größerer Verbraucher der Verbrauchergruppe 16a, welcher an denjenigen Energieverteilungsknoten 25 angeschlossen ist, der den Leistungsmesser 30d umfasst, höchstwahrscheinlich über einen begrenzten Zeitraum ausgefallen ist. Für eine Entscheidung der nächsten Bedarfsmeldung (Verbrauchsprognose) an den Energieerzeuger 5 könnte der Energielieferant 10 z.B. bei einem nun eingegrenzten Kundenkreis die Ursache eines etwaigen Minder- und/oder Mehrbedarfs ermitteln und Informationen über die voraussichtliche Dauer der Bedarfsabweichung anfragen. Dasselbe gilt auch, falls mehrere Energieerzeuger 5 und mehrere Energielieferanten 10 beteiligt sind.

Eine noch detailliertere Ortsauflösung für den Ort der Bedarfsabweichung könnte man dadurch erhalten, dass an weiteren Verzweigungsstellen des Energieversorgungsnetzwerks 1 an den entsprechenden Energieverteilungsknoten 25 weitere Leistungsmesser 30 vorgesehen werden.

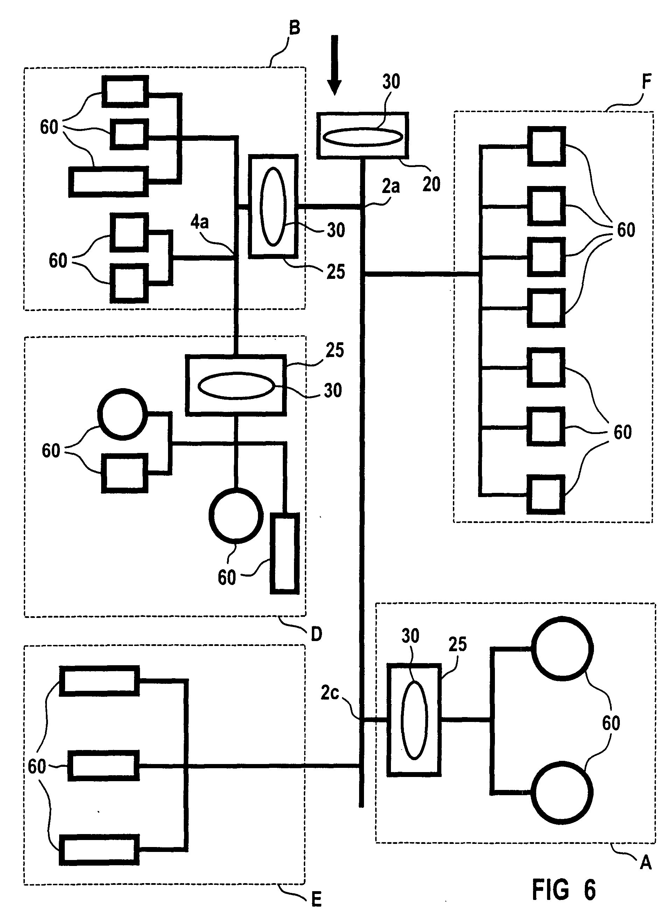

In Figur 6 ist ein Ausführungsbeispiel eines erfindungsgemäßen Energieversorgungsnetzwerks dargestellt, bei welchem die Verbraucher 60 aufgrund von vergangenen Verbrauchsdaten 40 klassifiziert sind; der Energieerzeuger 5, die Energieerzeugungsanlagen 7 und der Energielieferant 10 sind dabei nicht dargestellt.

Eine derartige Klassifizierung kann besonders vorteilhaft dazu verwendet werden, um diejenigen Energieverteilungsknoten 25 zu identifizieren, bei welchen ein Leistungsmesser 30 installiert werden soll, um den entsprechenden Leistungsbedarf, welcher von über diesen Energieverteilungsknoten 25 versorgten Verbrauchern 60 und/oder Verbrauchergruppen benötigt wird, festzustellen.

Die gezielte Identifikation von derartigen Energieverteilungsknoten 25 bietet weiterhin den Vorteil, die entsprechend entstehende Menge an momentanen Verbrauchsdaten 45 auf aussagekräftige Verbrauchsdaten zu reduzieren, da nicht an allen Energieverteilungsknoten 25 Leistungsmesser 30 installiert werden müssen, um entscheidende, aussagekräftige momentane Verbrauchsdaten 45 zu erfassen.

Eine mögliche Klassifizierung der vergangenen Verbrauchsdaten 40 und damit der zugehörigen Verbraucher 60 und/oder Verbrauchergruppen kann folgendermaßen geschehen:
- Klasse A:: hoher Leistungsbedarf mit unsicherer Vorhersagemöglichkeit basierend auf den vergangenen Verbrauchsdaten 40 (beispielsweise dem Vorjahresverbrauchsprofil),
- Klasse B:: mittlerer Leistungsbedarf mit unsicherer Vorhersagemöglichkeit basierend auf den vergangenen Verbrauchsdaten 40 (z.B. dem Vorjahresverbrauchsprofil),
- Klasse C:: niedriger Leistungsbedarf mit unsicherer Vorhersagemöglichkeit basierend auf den vergangenen Verbrauchsdaten 40 (z.B. dem Vorjahresverbrauchsprofil),
- Klasse D:: hoher Leistungsbedarf mit guter Vorhersagemöglichkeit basierend auf den vergangenen Verbrauchsdaten 40 (z.B. dem Vorjahresverbrauchsprofil),
- Klasse E:: mittlerer Leistungsbedarf mit guter Vorhersagemöglichkeit basierend auf den vergangenen Verbrauchsdaten (z.B. dem Vorjahresverbrauchsprofil), und
- Klasse F:: niedriger Verbrauch mit guter Vorhersagemöglichkeit basierend auf den vergangenen Verbrauchsdaten 40 (z.B. dem Vorjahresverbrauchsprofil).

Unter unsicherer Vorhersagemöglichkeit werden insbesondere unvorhersehbare Störungen verstanden, welche die Verbraucher 60 betreffen können und welche Ausfälle z.B. von Produktionsanlagen oder ungewollte Abschaltungen von Energieversorgungsleitungen umfassen.

Klimatische Verhältnisse (beispielsweise der Verlauf von Tages- und/oder Nachttemperaturen), Änderungen von installierten Leistungen (beispielsweise die Zu- und/oder Abschaltung von Maschinen bei einem oder mehreren Verbrauchern 60), Änderung der Anzahl der vom Energielieferanten 10 oder einem anderen Energielieferanten mit elektrischer Energie versorgten Verbraucher sind Beispiele für bekannte Einflussgrößen, welche einen absehbaren Minder- und/oder Mehrbedarf verursachen können. Derartige bekannte Einflussgrößen können vorteilhaft bei einer Verbrauchsprognose berücksichtigt werden, indem beispielsweise die vergangenen Verbrauchsdaten (beispielsweise ein Vorjahresverbrauchsprofil) korrigiert werden mittels eines Rechenprogramms, welches die genannten bekannten Einflussgrößen berücksichtigt.

Auch wenn zur Zeit eine Energieprognose mit 24-stündigem Vorlauf noch die Regel ist, sind Verbrauchseinflussdaten 50, beispielsweise Umgebungsbedingungen wie Temperaturverläufe vom Vortag, von Bedeutung und können die Verbrauchsprognose beispielsweise durch die Verwendung von bekannten Methoden der Wahrscheinlichkeitsrechnung verbessern. Wird dabei z.B. ersichtlich, dass bei einem Verbraucher 60 oder einer Verbrauchergruppe ein erhöhter Energiebedarf nur nachts reduziert ist und diesem Verbraucher und/oder dieser Verbrauchergruppe üblicherweise ein Drei- oder Vierschichtarbeitsbetrieb stattfindet und z.B. ein Rückgang des Auftragseingangs eines wichtigen Verbrauchers bekannt ist, können ebenfalls mit Hilfe dieser Informationen entsprechende Korrekturen in die Verbrauchsprognose eingerechnet werden.

In der Figur 6 wurde eine Klassifikation nach dem dargestellten Muster vorgenommen. Aufgrund dieser Klassifikation wurde den mit den Klassen A, B und D versehenen Verbraucher 60 und/oder Verbrauchergruppen jeweils mindestens ein Leistungsmesser 30 zugeordnet. Der jeweilige Leistungsmesser 30 wird dabei vorteilhaft von demjenigen Energieverteilungsknoten 25 umfasst, über welchen die entsprechende klassifizierten Verbraucher 60 und/oder Verbrauchergruppen mit elektrischer Energie versorgt sind. Die Verbräuche der mit den Klassen E und F versehenen Verbraucher 60 benötigen aufgrund der Höhe des (jeweils zu erwartenden) Leistungsbedarfs und der guten Vorhersagewahrscheinlichkeit für den zukünftigen Leistungsbedarf keinen Leistungsmesser.

Mit dem erfindungsgemäßen Energieversorgungsnetzwerk der Figur 6 können nun gezielt momentane Verbrauchsdaten von solchen Verbrauchern 60 und/oder Verbrauchergruppen erfasst werden, welche einen besonders gewichtigen Einfluss auf eine zu erstellende Verbrauchsprognose ausüben. Mit der Klasse C versehene Verbraucher 60 sind in der Figur nicht näher dargestellt.

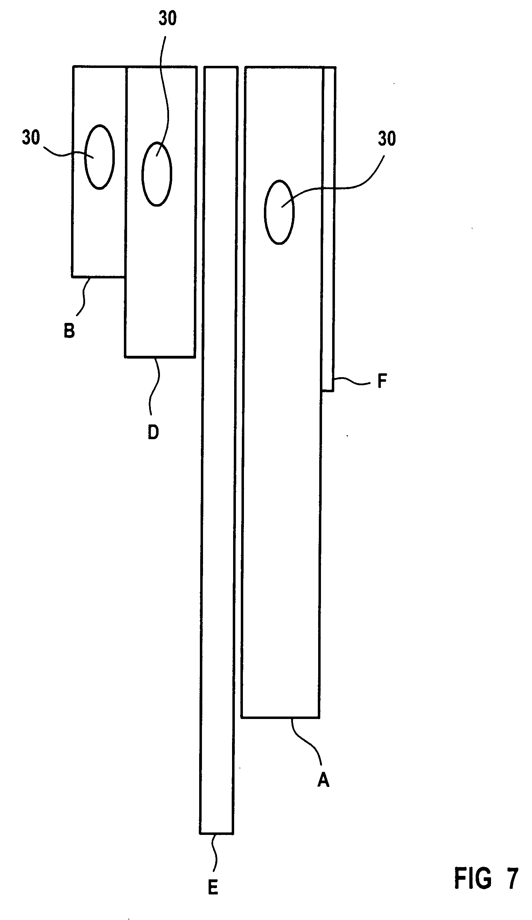

In der Figur 7 ist beispielhaft die Verteilung des jeweils zu den mit den Klassen A bis E klassifizierten Verbrauchern gehörigen Leistungsbedarfs dargestellt. Die Breite der jeweils dargestellten Balken ist dabei ein Maß für die Höhe des jeweiligen Bedarfs. Da der Bedarf der zu den Klassen E und F zugehörigen Verbraucher 60 mittel oder niedrig ist und eine gute Vorhersagewahrscheinlichkeit für den zu erwartenden Leistungsbedarf besteht, werden momentane Verbrauchsdaten 45 dieser genannten Verbraucher 60 nicht mittels Leistungsmessern 30 festgestellt. Nicht näher dargestellt ist der Bedarf der mit der Klasse C klassifizierten Verbraucher 60 und/oder Verbrauchergruppen.

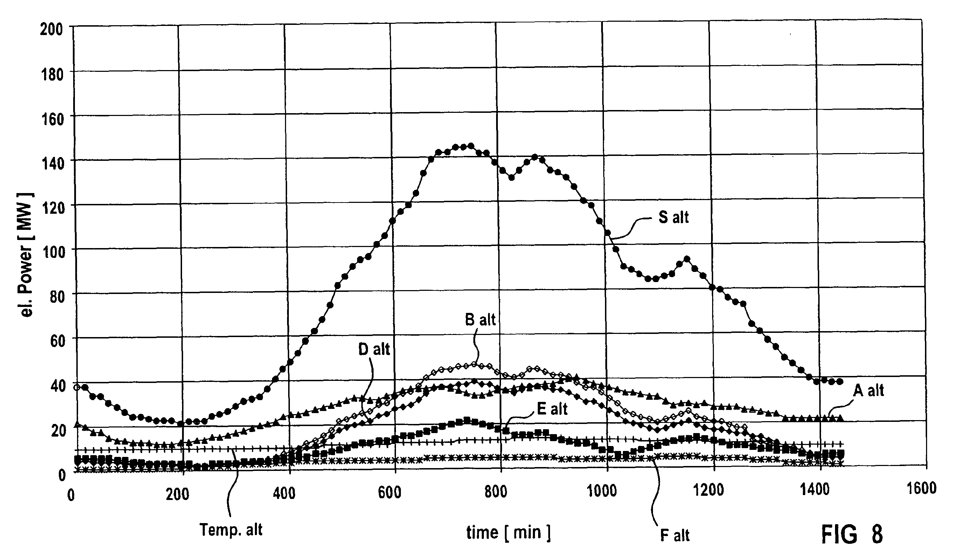

Figur 8 zeigt vergangene Verbrauchsdaten Aₐₗₜ, Bₐₗₜ, Dₐₗₜ, Eₐₗₜ und F_{alt,} sowie die daraus gebildete Verbrauchssumme Sₐₗₜ mit einer Zeitauflösung von 15 Minuten. Es handelt sich dabei um die vergangenen Verbrauchsdaten des entsprechenden Tages des Vorjahres, welche zu mit den Klassen A, B, D, E und F versehenen Verbrauchern gehören. Momentane Verbrauchsdaten 45 dieser Verbraucher, beispielsweise solche, die mittels Leistungsmessern 30 erfasst sind, sind dabei nicht berücksichtigt. In der Figur ist außerdem der Verlauf der Lufttemperatur Tempₐₗₜ des dargestellten Vorjahrestags gezeigt.

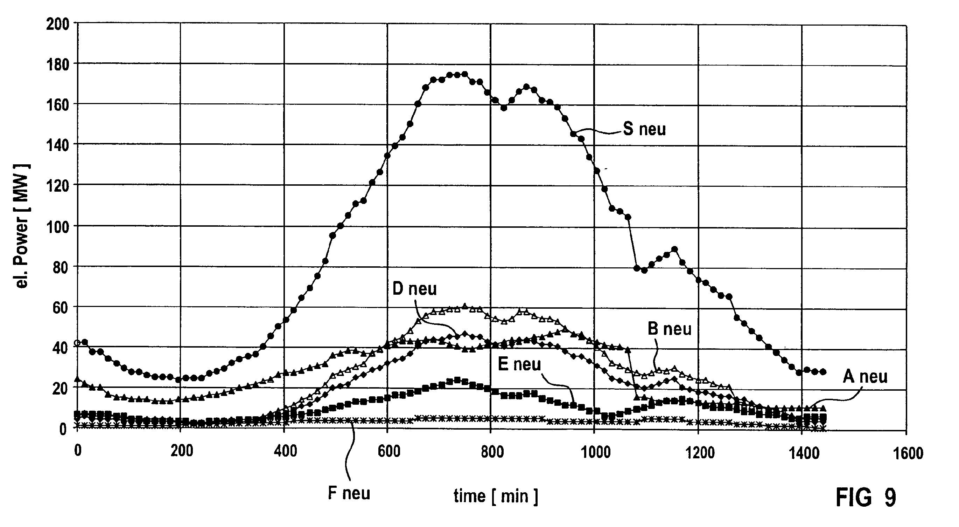

Figur 9 zeigt einen prognostizierten Verlauf Aₙₑᵤ, Bₙₑᵤ, Dₙₑᵤ, Eₙₑᵤ, Fₙₑᵤ von Verbrauchsdaten für die zu den Klassen A, B, D, E und F gehörigen Verbraucher und/oder Verbrauchergruppen für einen Tag, welcher zeitlich ein Jahr nach dem Zeitpunkt der in Figur 8 angegebenen vergangenen Verbrauchsdaten liegen soll.

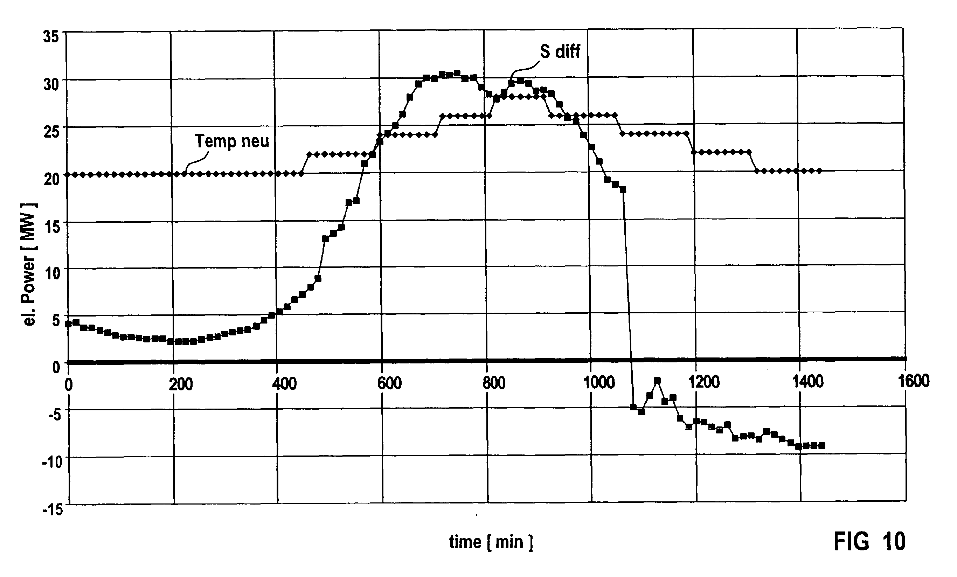

In die Berechnung dieser Prognose sind der für den Tag der Prognose erwartete, Temperaturverlauf (basierend auf Temperaturmessdaten des Vortages; siehe auch FIG 10.) und die Wettervorhersage des Wetteramts berücksichtigt, sowie die Tatsache, dass ein Verbraucher seinen Arbeitsbetrieb von drei auf zwei Schichten reduziert hat. Dieser Verbraucher soll beispielsweise über denjenigen Energieverteilungsknoten 25 versorgt sein, welcher den Leistungsmesser 30d umfasst (siehe FIG 1). Der daraus erwachsende Anteil als Einflussgröße für einen zu erwartenden Minderbedarf sei aus Verbrauchsdaten dieses Verbrauchers kürzlich zurückliegender Tage bekannt.

Aus vergangenen Verbrauchsdaten hinsichtlich des Bedarfverlaufs an den einzelnen Wochentagen kann gefolgert werden, dass der Wochentag keinen besonderen Einfluss auf den zu erwartenden Bedarf hat. Des Weiteren ist der resultierende prognostizierte Summenbedarf Sₙₑᵤ dargestellt!

Infolge der im Vergleich zur Figur 8 nun angenommenen höheren Tagestemperaturen ist ein im Vergleich zu den in Figur 8 dargestellten vergangenen Verbrauchsdaten des Vorjahres erhöhter Energieverbrauch zu erwarten.

Der prognostizierte Verlauf Aₙₑᵤ spiegelt den zu erwartenden Minderbedarf an elektrischer Energie, verursacht durch den Wegfall der dritten Schicht bei einem oben genannten Verbraucher, wider.

Im dargestellten Beispiel ist aufgrund der im Vergleich zum Vorjahr nun angenommenen höheren Tagestemperaturen ein deutlicher Anstieg des zu erwartenden Summenbedarfs Sₙₑᵤ zu erwarten, welcher den zu erwartenden vorher genannten Minderbedarf eines Verbrauchers praktisch kompensiert.

Figur 10 zeigt die Differenz S_{diff} zwischen den in Figur 9 und Figur 8 dargestellten summierten Bedarfsdaten Sₐₗₜ bzw. Sₙₑᵤ. Des Weiteren ist der tatsächliche, momentane Temperaturverlauf Tempₙₑᵤ dargestellt, welcher deutlich vom in FIG 8 dargestellten Temperaturverlauf Tempₐₗᵣ des Vorjahres abweicht. Dadurch ist der tatsächliche, momentane Bedarf besonders zu Zeiten der auftretenden Lastspitzen um mehr als 20 % erhöht.

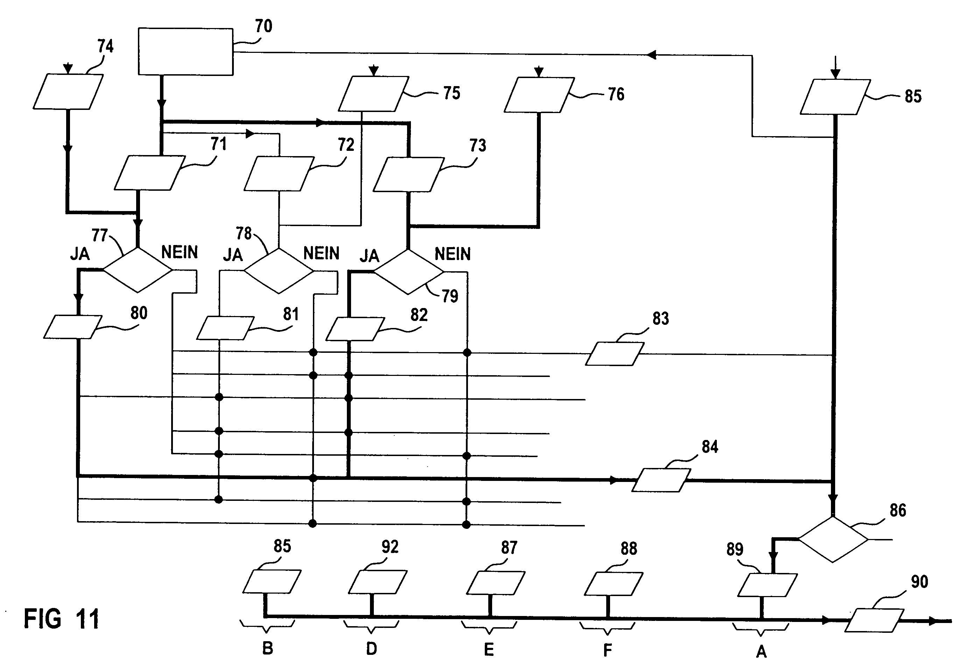

Figur 11 zeigt ein Flussdiagramm zur Erstellung einer optimierten Energieverbrauchsprognose. Dieses Flussdiagramm kann beispielsweise als Grundlage für ein Computerprogramm dienen. Als Beispiele seien die mit der Klasse A versehenen Verbraucher und/oder Verbrauchergruppen aus der Figur 6 herangezogen.

Um den gesamten Energieverbrauch prognostizieren zu können, müssen die Verbrauchsdaten aller Verbraucher in ein entsprechendes Rechenprogramm einfließen.

Aus einem Speicher 70 werden vergangene Verbrauchsdaten 71, 72 und 73 ausgelesen und an Verarbeitungsstellen 77, 78 und 79 gegeben. Die vergangenen Verbrauchsdaten umfassen dabei beispielsweise die maximal erforderliche Leistung jedes Tages eines Vorjahres-Verbrauchsprofils und ggf. Verbrauchseinflussdaten, wie die jeweils zugehörige Temperatur, den Wochentag und weitere Verbrauchseinflussdaten umfassen können.

Den Verarbeitungsstellen 77, 78 und 79 werden weiterhin momentane Verbrauchsdaten 74,75 und 76 zugeführt, welche den vergangenen Verbrauchsdaten jeweils entsprechende, momentane Verbrauchsdaten beinhalten.

Die Verarbeitungsstellen 77, 78 und 79 führen einen Vergleich der vergangenen Verbrauchsdaten 71, 72 und 73 mit den entsprechenden momentanen Verbrauchsdaten 74, 75 bzw. 76 durch. Besteht eine spürbare Abweichung zwischen den vergangenen und den momentanen Verbrauchsdaten, so werden mittel Korrekturstufen 80, 81 und 82 korrigierte Verbrauchsdaten erzeugt, wobei hierfür sowohl die vergangenen Verbrauchsdaten 71, 72 und 73, als auch die momentanen Verbrauchsdaten 74, 75 und 76 herangezogen werden. Dazu sind an die Ausgänge JA der Verarbeitungsstellen 77, 78 und 79 die jeweils zugeordneten Korrekturstufen 80, 81 und 82 angeschaltet. An den mit NEIN bezeichneten Ausgängen der Verarbeitungsstellen 77, 78 und 79 liegen die unveränderten, vergangenen Verbrauchsdaten 71, 72 und 73 an.

Zur Ermittlung von prognostizierten Verbrauchdaten stehen somit alle möglichen Kombinationen von vergangenen Verbrauchsdaten und ggf. korrigierten Verbrauchsdaten zur Verfügung.

In der Figur 11 sind beispielhaft zwei Prognosestufen 83 und 84 vorgesehen, welche eine Verknüpfung von vergangenen und korrigierten Verbrauchsdaten vornehmen, um prognostizierte Verbrauchsdaten zu erzeugen.

Einer Messstelle 85 werden ebenfalls momentane Verbrauchsdaten, üblicherweise real gemessene Verbrauchsdaten, zugeführt, welche die momentanen Verbrauchdaten 74, 75 und 76 umfassen können.

Die der Messstelle 85 zugeführten momentanen Verbrauchsdaten werden bevorzugt zyklisch erfasst. Die in einem aktuellen Messzyklus erfassten momentanen Verbrauchsdaten werden nach der Messstelle 85 abgegriffen und dem Speicher 70 zuführt; die momentanen Verbrauchsdaten des zurückliegenden Messzyklus werden mittels der Messstelle 85 an einen Eingang einer Berechnungsstelle 86 angelegt. Diesem Eingang der Berechnungsstelle 86 werden weiterhin die von mindestens einer Prognosestufe 83, 84 erzeugten prognostizierten Verbrauchsdaten zugeführt.

Die Berechnungsstelle 86 ermittelt aus dem momentanen Verbrauchsdaten des zurückliegenden Messzyklus beispielsweise mittels Methoden der Wahrscheinlichkeitsrechnung weitere prognostizierte Verbrauchsdaten, wie sie im aktuellen Messzyklus zu erwarten wären (Trenddaten).

Die von mindestens einer der Prognosestufen 83, 84 erzeugten prognostizierten Verbrauchsdaten stellen berechnete prognostizierte Verbrauchsdaten für den aktuellen Messzyklus dar.

In der Berechnungsstelle 86 findet nun ein Vergleich statt, inwieweit die prognostizierten (berechneten) Verbrauchsdaten mit den weiteren prognostizierten Verbrauchsdaten (Trenddaten) übereinstimmen. Es findet dabei also ein Vergleich von zwei separaten Sätzen an Prognosedaten statt, welche auf unterschiedliche Art und Weise erzeugt wurden und welche sich beide auf den selben aktuellen Messzyklus beziehen.

Stimmen beide Sätze an Prognosedaten ggf. mit einer tolerablen Abweichung überein, dann werden die mittels mindestens einer der Prognosestufen 83, 84 erzeugten errechneten prognostizierten Verbrauchsdaten für eine nächste Verbrauchsprognose benutzt. Andernfalls können die weiteren prognostizierten Verbrauchsdaten zur Erstellung der nächsten Verbrauchsprognose verwendet werden oder auch eine Überlagerung der prognostizierten Verbrauchsdaten und der weiteren prognostizierten Verbrauchsdaten.

Bei einer Abweichung der prognostizierten Verbrauchsdaten von den weiteren prognostizierten Verbrauchsdaten können auch weitere Parameter zur Erstellung der nächsten Verbrauchsprognose mit einbezogen werden, wie z.B. weitere Trends, ein Risikozuschlag oder auch Vergleiche von vergangenen mit momentanen Verbrauchsdaten aus mehreren, ggf. weiter zurückliegenden Messzyklen.

In Figur 11 stellt die Berechnungsstelle 86 beispielhaft eine gute Übereinstimmung der prognostizierten Verbrauchsdaten mit den weiteren prognostizierten Verbrauchsdaten fest und verwendet mindestens die von einer der Prognosestufen 83, 84 erzeugten prognostizierten Verbrauchsdaten als nächste Bedarfsprognose 89, beispielsweise für den Zeitraum des nächsten Messzyklus. Diese Bedarfprognose 89 soll dabei dem zu erwartenden Gesamtbedarf von mit der Klasse A klassifizierten Verbrauchern entsprechen.

Analog werden Bedarfsprognosen 85, 92, 87 und 88 für mit den Klassen B, D, E und F klassifizierte Verbraucher erstellt. Das vorgehen für letztere Verbraucher ist in FIG 11 nicht detailliert dargestellt. Eine Gesamtbedarfsprognose 90 ergibt sich als Summe der Bedarfsprognosen 85, 92, 87, 88 und 89.

In einer Vereinfachung der in der Figur visualisierter Vorgehensweise können als Bedarfsprognosen direkt die prognostizierten Verbrauchsdaten oder die weiteren prognostizierten Verbrauchsdaten verwendet werden, ohne dass ein Vergleich in einer Berechnungsstelle stattfindet.

Geeignete Leistungsmesser für ein erfindungsgemäßes Energieversorgungsnetzwerk sind z.B. sogenannte Maximumzähler, welche die höchste mittlere Leistung, die innerhalb eines Ablesezeitraums aufgetreten ist, detektieren und speichern. Die mittlere Leistung ist dabei meist eine über einen Zeitraum von 15 Minuten gemittelte Leistung, andere Zeiträume sind jedoch ebenfalls denkbar. Bevorzugt werden elektronische Maximumzähler eingesetzt und mit Hilfe eines Mikroprozessors Verbrauch, Mittelwert und Maximum ermittelt. Diese Daten können dann sehr einfach zusammen mit einer Identifikation des jeweiligen Leistungsmessers zu einer Datenverarbeitungszentrale fernübertragen werden.

Ein erfindungsgemäßes Energieversorgungsnetzwerk sowie ein erfindungsgemäßes Verfahren sind nicht nur für das Anwendungsgebiet der elektrischen Energie anwendbar, sondern für praktisch alle Arten des Energieverbrauchs, wie z.B. den Verbrauch von Wasser, Gas und/oder Wärme.

## Patentansprüche

1. Energieversorgungsnetzwerk (1) umfassend mindestens eine Kraftwerksanlage (5), mindestens einen Energielieferanten (10), mindestens einen Energieeinspeiseknoten (20), eine Anzahl an Energieverteilungsknoten (25) und eine Anzahl an Verbrauchern (60), welche über die Energieverteilungsknoten (25) mit elektrischer Energie aus der Kraftwerksanlage (5) versorgt sind, wobei die elektrische Energie in den Energieeinspeiseknoten (20) eingespeist ist,
**dadurch gekennzeichnet, dass** mindestens ein Teil der Energieverteilungsknoten (25) jeweils einen Leistungsmesser (30,30a,30b,30c,30d) umfassen, mittels welchem die entnommene summierte elektrische Leistung all derjenigen Verbraucher (60) feststellbar ist, welche über den jeweiligen Energieverteilungsknoten (25) mit elektrischer Energie versorgt sind.

2. Energieversorgungsnetzwerk (1) nach Anspruch 1,
**dadurch gekennzeichnet, dass** eine Menge an elektrischer Leistung, welche von der Kraftwerksanlage (5) zur Einspeisung von elektrischer Energie in den Energieeinspeiseknoten (20) bereitzustellen ist, vom Energielieferanten (10) ermittelt ist mittels vergangener (40) und momentaner Verbrauchsdaten (45) mindestens eines Teils der Verbraucher (60), wobei die momentanen Verbrauchsdaten (45) die mittels der Leistungsmesser (30,30a,30b,30c,30d) jeweils festgestellte summierte elektrische Leistung umfassen.

3. Energieversorgungsnetzwerk (1) nach Anspruch 2,
**dadurch gekennzeichnet, dass**
die momentanen Verbrauchsdaten (45) weiterhin Umgebungsbedingungen und/oder einen absehbaren Minderverbrauch und/oder einen absehbaren Mehrverbrauch umfassen.

4. Energieversorgungsnetzwerk (1) nach einem der Ansprüche 2 oder 3,
**dadurch gekennzeichnet, dass** diejenigen Energieverteilungsknoten (25), welche jeweils einen Leistungsmesser (30,30a,30b,30c,30d) umfassen, mittels der vergangenen Verbrauchsdaten (40) und einer Klassifizierung letzterer festgelegt sind.

5. Verfahren zum Betrieb eines Energieversorgungsnetzwerks (1), umfassend mindestens eine Kraftwerksanlage (5), mindestens einen Energielieferanten (10), mindestens einen Energieeinspeiseknoten (20) und eine Anzahl an Verbrauchern (60), welche über eine Anzahl an Energieverteilungsknoten (25) mit elektrischer Energie versorgt werden,
**dadurch gekennzeichnet, dass** eine Menge an elektrischer Leistung, welche von der Kraftwerksanlage (5) zur Einspeisung von elektrischer Energie in den Energieeinspeiseknoten (25) bereitzustellen ist, vom Energielieferanten (10) ermittelt wird mittels vergangener (40) und momentaner Verbrauchsdaten (45) mindestens eines Teils der Verbraucher (60), wobei die momentanen Verbrauchsdaten (45) einen mittels Leistungsmesser (30,30a,30b,30c,30d) festgestellten elektrischen Leistungsbedarf umfassen, und dass die Kraftwerksanlage (5) die ermittelte Menge an elektrischer Energie Leistung zur Einspeisung von elektrischer Energie in den Energieeinspeiseknoten (20) bereitstellt.

6. Verfahren nach Anspruch 5,
**dadurch gekennzeichnet, dass**
die Leistungsmesser (30,30a,30b,30c,30d) eine dem Energieversorgungsnetzwerk (1) entnommene summierte elektrische Leistung derjenigen Verbraucher (60) ermitteln, welche über den, den jeweiligen Leistungsmesser umfassenden, Energieverteilungsknoten (25) mit elektrischer Energie versorgt werden.

7. Verfahren nach Anspruch 6,
**dadurch gekennzeichnet, dass**
die Leistungsmesser (30,30a,30b,30c,30d) für diejenigen Energieverteilungsknoten (25) vorgesehen werden, welche auf Grund einer Klassifizierung der vergangenen Verbrauchsdaten einen hohen Leistungsbedarf und/oder einen überraschenden Leistungsbedarf der über den jeweiligen Energieverteilungsknoten (25) versorgten Verbraucher und/oder Verbrauchergruppen erwarten lassen.

8. Energieversorgungsnetzwerk (1) umfassend mindestens einen Energieeinspeiseknoten (20), eine Anzahl an Energieverteilungsknoten (25) und eine Anzahl an Verbrauchern (60), welche über die Energieverteilungsknoten (25) mit Energie versorgt sind, wobei die Energie in den Energieeinspeiseknoten (20) eingespeist ist,
**dadurch gekennzeichnet, dass** mindestens ein Teil der Energieverteilungsknoten (25) jeweils ein Energiemengenerfassungsgerät (30,30a,30b,30c,30d) umfassen, mittels welchem die entnommene summierte Energie all derjenigen Verbraucher (60) feststellbar ist, welche über den jeweiligen Energieverteilungsknoten (25) mit Energie versorgt sind.
